# EUROPEAN PATENT SPECIFICATION

(11) **EP 3 522 174 B1**
(45) Date of publication and mention of the grant of the patent: **03.03.2021**
(21) Application number: 17856801.0
(22) Date of filing: 28.09.2017
(51) Int. Cl.: G21C 9/012, G21C 13/02, G21C 15/18, G21C 17/032, B65D 88/02, B65D 90/52, B65D 90/32, B65D 90/00, G08B 21/18

(54) **NUCLEAR REACTOR BUILDING WITH PASSIVE COOLING SYSTEM COMPRISING A COOLING WATER STORAGE RESERVOIR**
KERNREAKTORGEBÄUDE MIT PASSIVEM KÜHLSYSTEM UND KÜHLWASSERAUFBEWAHRUNGSRESERVOIR DAFÜR
BÂTIMENT DE RÉACTEUR NUCLÉAIRE AVEC SYSTÈME DE REFROIDISSEMENT PASSIF COMPRENANT UN RÉSERVOIR DE STOCKAGE D'EAU DE REFROIDISSEMENT

(30) Priority: 29.09.2016 KR 20160125738; 30.09.2016 KR 20160126842; 30.09.2016 KR 20160126849
(43) Date of publication of application: 07.08.2019
(73) Proprietor: Korea Hydro & Nuclear Power Co., Ltd, Gyeongju-si, Gyeongsangbuk-do 38120 (KR)
(72) Inventor: KIM, Dae Hun, Sejong 30098 (KR); LEE, Sang Won, Daejeon 34049 (KR); LIM, Sang Gyu, Daejeon 34049 (KR); KIM, Han Gon, Daejeon 34070 (KR); HA, Hui Un, Daejeon 34082 (KR); HEO, Sun, Daejeon 35355 (KR); CHEON, Jong, Daejeon 34199 (KR); YOON, Byoung Jo, Geumjeong-gu, Busan, 46241 (KR)
(74) Representative: Habermann, Hruschka & Schnabel
(86) International application number: PCT/KR2017/010874
(87) International publication number: WO 2018/062915

(56) References cited:
- EP-A1- 2 814 038
- JP-A- H 085 772
- JP-A- H 085 772
- JP-A- 2007 170 832
- KR-A- 20140 112 198
- KR-B1- 101 389 276
- KR-B1- 101 528 223
- KR-B1- 101 659 864
- US-A- 5 661 770

## Description

### [Technical Field]

The present invention relates to a cooling water storage reservoir and a nuclear reactor building passive cooling system including the same, and more particularly, to a cooling water storage reservoir for cooling a nuclear reactor building and a nuclear reactor building passive cooling system including the same.

### [Background Art]

In general, in the case of a design basis accident and a major accident at a nuclear power plant, a radioactive material is discharged together with steam into the nuclear reactor building and thus a temperature and pressure in the nuclear reactor building rise sharply. In this case, when the rising temperature and pressure are not adjusted, the nuclear reactor building may be destroyed. Therefore, a nuclear reactor building cooling system is provided in the nuclear reactor building and thus in case of a design basis accident and a major accident, the rising temperature and pressure may be adjusted.

However, in the case of a design basis accident and a major accident, it is difficult for an operator to access to control the cooling system, and there is a problem that the cooling system does not operate properly due to a problem such as an offside power loss. Therefore, a passive cooling system is applied. The passive cooling system may include a cooling water storage reservoir installed outside the nuclear reactor building and a heat exchanger extended from the cooling water storage reservoir into the nuclear reactor building.

Therefore, in the case of a design basis accident and a major accident, as the heat exchanger passively operates, the nuclear reactor building is cooled. Here, at the beginning of the accident, thermal energy is smoothly removed by a low temperature of cooling water. However, when a temperature of cooling water rises due to repeated heat exchange, thermal energy may not be completely removed and thus there is a problem that a temperature and pressure of the nuclear reactor building rise again.

For example, nuclear reactors with passive cooling systems for a nuclear reactor building according to the preamble of claim 1 are known from KR 2014 0112198 A, EP 2 814 038 A1, US 5,661,770 A and JP H08 5772 A, respectively.

### [Disclosure]

### [Technical Problem]

The present invention provides a cooling water storage reservoir, and a nuclear reactor building passive cooling system including the same, the reservoir capable of preventing re-pressurization and reheating of a nuclear reactor building from the cooling of a nuclear reactor building in the case of a design basis accident and a major accident.

### [Technical Solution]

The invention provides a nuclear reactor having a building and a building passive cooling system having the features of claim 1.

A nuclear reactor building passive cooling system according to the present invention is disposed adjacent to an outer wall of a nuclear reactor building to passively cool the nuclear reactor building and includes: a storage tank storing cooling water; a partition part which is disposed inside the storage tank, which partitions inside of the storage tank into a first storage tank and a second storage tank to separate the cooling water, and which has an inlet for causing the cooling water of the second storage tank to naturally flow into the first storage tank according to a water level difference between the first and second storage tanks; a heat exchanger extending from the first storage tank to the inside of the nuclear reactor building and cooling the reactor building based on the cooling water of the first storage tank; and a steam discharging unit connected to the heat exchanger and discharging steam generated in the heat exchanger to outside of the heat exchanger.

The steam discharging unit has one end communicating with the heat exchanger and the other end communicating with the first storage tank.

The other end of the steam discharging unit communicates with the first storage tank at a position higher than a position of the cooling water contained in the first storage tank.

The system may further include a steam outlet provided in the first storage tank and forming a path along which steam generated in the first storage tank is discharged to outside; and a water level reduction delay unit provided in the steam outlet and separating moisture contained in the steam to delay reduction of a water level of the first storage tank.

The water level reduction delay unit may include a moisture separator.

The system may further include a passive alarm unit provided in the steam outlet and configured to alarm operation of the heat exchanger based on steam being introduced into the steam outlet.

The passive alarm unit may further include a passive sound generating module configured to generate noise in response to steam being introduced into the steam outlet.

The passive alarm unit may include: a propeller provided inside the steam outlet and capable of rotating in response to steam being introduced into the steam outlet; and a light source connected to the propeller in outside of the steam outlet and capable of being turned on based on power generated by the propeller.

A capacity of the first storage tank may be smaller than a capacity of the second storage tank.

A cooling water storage reservoir capable of passively cooling a building according to the present invention includes: a storage tank which stores cooling water; a partition part which is disposed inside the storage tank, which partitions inside of the storage tank into a first storage tank and a second storage tank so that the cooling water can be separated, and which has an inlet for causing the cooling water of the second storage tank to naturally flow into the first storage tank according to a water level difference between the first and second storage tanks; a heat exchanger extending from the first storage tank to inside of the building and cooling the building based on the cooling water of the first storage tank; and a steam discharging unit connected to the heat exchanger and discharging steam generated in the heat exchanger to outside of the heat exchanger.

### [Advantageous Effects]

A cooling water storage reservoir and a nuclear reactor building passive cooling system including the same according to the present invention have advantageous effects in that performance of the nuclear reactor building passive cooling system is quickly stabilized to thereby prevent performance deterioration thereof and the presence of a steam discharging unit minimizes flow instability caused by intersection between water and steam to thereby allow stable operation of the passive cooling system.

Further, a cooling water storage reservoir and a nuclear reactor building passive cooling system including the same according to the present invention can continuously reduce a pressure and temperature of the nuclear reactor building, thereby suppressing occurrence of a secondary accident such as destruction of the nuclear reactor building.

The technical effects of the present invention are not limited to the effects mentioned above, and other technical effects not mentioned can be clearly understood by those skilled in the art from the following description.

### [Description of Drawings]

FIG. 1 is a conceptual view schematically illustrating a nuclear reactor building passive cooling system according to the present embodiment;
FIG. 2 is a cross-sectional view illustrating a nuclear reactor building passive cooling system according to the present embodiment taken along line I-I' of FIG. 1;
FIG. 3 is a cross-sectional view schematically illustrating a cooling water storage reservoir of a nuclear reactor building passive cooling system according to the present embodiment;
FIG. 4 is a graph illustrating a passive alarm unit of a nuclear reactor building passive cooling system according to the present embodiment;
FIG. 5 is a cross-sectional view illustrating a cooling water storage reservoir of a nuclear reactor building passive cooling system according to the present embodiment taken along line II-II' of FIG. 1;
FIG. 6 is a graph illustrating changes in an internal pressure and temperature of a nuclear reactor building according to use of a cooling water storage reservoir of a conventional passive cooling system;
FIG. 7 is a graph illustrating changes in an internal pressure and temperature of a nuclear reactor building according to use of a cooling water storage reservoir of a nuclear reactor building passive cooling system according to the present embodiment;
FIG. 8 is a flowchart illustrating an operation of a nuclear reactor building passive cooling system according to the present embodiment; and
FIG. 9 is a graph illustrating a passive alarm unit of a nuclear reactor building passive cooling system according to another embodiment.

### [Mode for Invention]

Hereinafter, an embodiment according to the present invention will be described in detail with reference to the attached drawings. However, it should be understood that the present embodiment is not limited to embodiments described hereinafter, but may be implemented in various forms. The invention is defined in the appended claims. In the drawing, shapes of elements may be exaggeratingly expressed for better description, and like reference numerals designate like elements in the drawing.

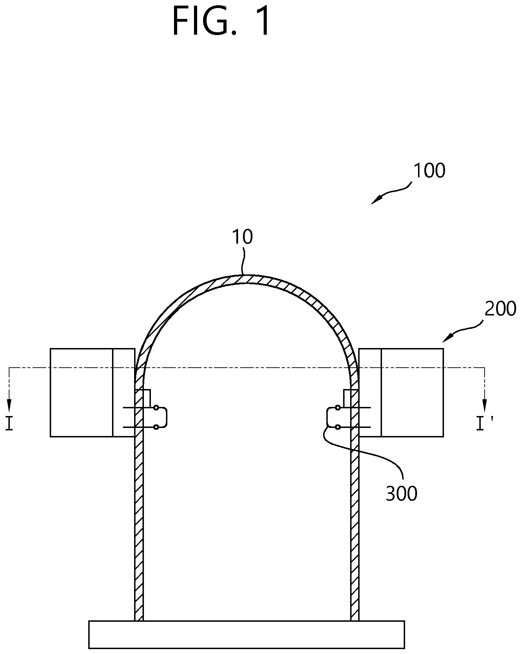

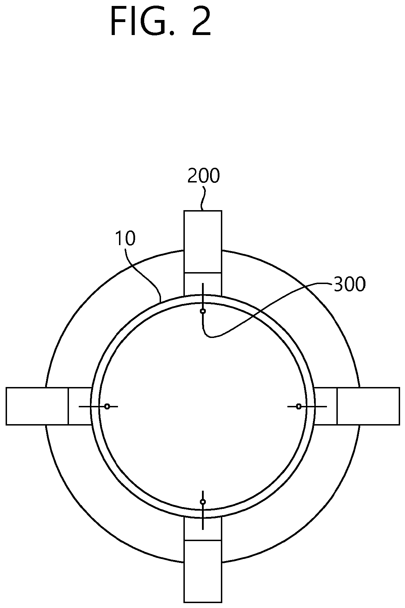

FIG. 1 is a conceptual view schematically illustrating a nuclear reactor building passive cooling system according to the present embodiment, and FIG. 2 is a cross-sectional view illustrating a nuclear reactor building passive cooling system according to the present embodiment taken along line I-I' of FIG. 1.

As shown in FIGS. 1 and 2, a nuclear reactor building passive cooling system 100 (hereinafter, referred to as a cooling system) according to the present embodiment includes a cooling water storage reservoir 200.

The cooling water storage reservoir 200 may be disposed in an upper area of an outer circumference of a nuclear reactor building 10. The cooling water storage reservoir 200 may supply cooling water to the inside of the nuclear reactor building 10, as needed, and in this case, even if main power of a reactor facility is shut off, the cooling water storage reservoir 200 may be disposed in an upper area of the nuclear reactor building 10 so as to supply cooling water by natural drop. However, when it is unnecessary to supply cooling water to the inside of the nuclear reactor building 10, a height of the cooling water storage reservoir 200 may be changed.

The cooling water storage reservoir 200 may be disposed in the plural, FIG. 2 illustrates an embodiment in which four cooling water storage reservoirs 200 are provided, and the number of the cooling water storage reservoirs 200 is not limited thereto.

A heat exchanger 300 is connected to the cooling water storage reservoir 200. One side of the heat exchanger 300 is disposed inside the cooling water storage reservoir 200 and the other side thereof is extended into the nuclear reactor building 10. For example, an outflow pipe 310 and an inflow pipe 320 of the heat exchanger 300 are extended to the cooling water storage reservoir 200, and a heat exchange unit 330 is disposed inside the nuclear reactor building 10. Therefore, in the event of a cooling water spill accident, the heat exchanger 300 enables the nuclear reactor building 10 to be cooled based on cooling water stored in the cooling water storage reservoir 200.

In addition, a steam discharging unit 340 in a pipe shape may be provided in the heat exchanger 300. The steam discharging unit 340 may have one end connected to an outflow pipe 310 and the other end communicating with the cooling water storage reservoir 200. According to the invention, the other end of the steam discharging unit 340 communicates with the cooling water storage reservoir 200 at a portion of a height higher than a height of cooling water contained in the cooling water storage reservoir 200.

When cooling water circulates in the heat exchanger 300 to thereby cool a nuclear reactor building 10, the steam discharging unit 340 may discharge vapor generated in the heat exchanger 300 to the atmosphere. That is, boiling may occur in the heat exchanger 300 during a heat exchange process, and the steam discharging unit 340 may discharge vapor generated in response to the boiling to the outside of the heat exchanger 300.

According to the invention, the other end of the steam discharging unit 340 communicates with the inside of the cooling water storage reservoir 200.

The cooling water stored in the cooling water storage reservoir 200 may be received while being partitioned in the cooling water storage reservoir 200. Hereinafter, the cooling water storage reservoir 200 according to the present embodiment will be described in detail with reference to the accompanying drawings. However, a detailed description of the above-described constituent elements is omitted and constituent elements identical to or corresponding to those according to the foregoing embodiment are denoted by the same reference numerals.

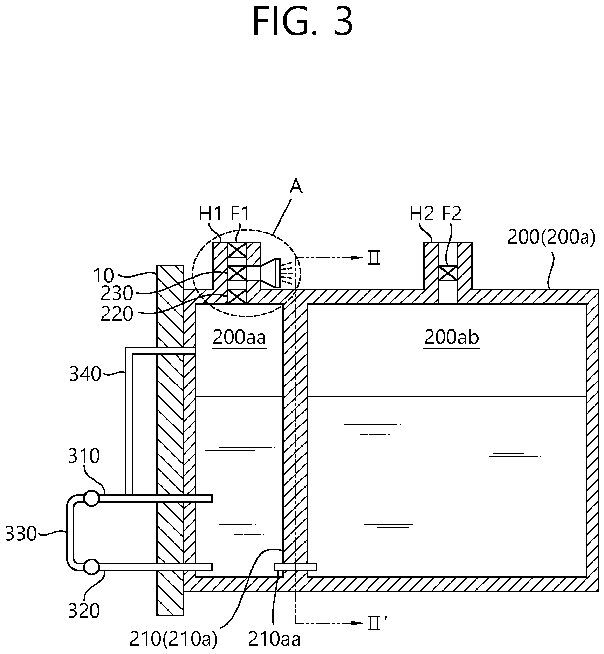

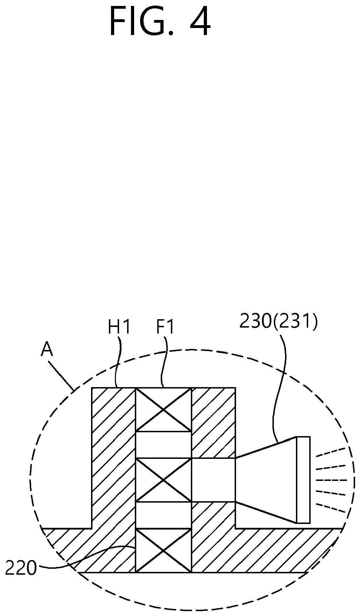

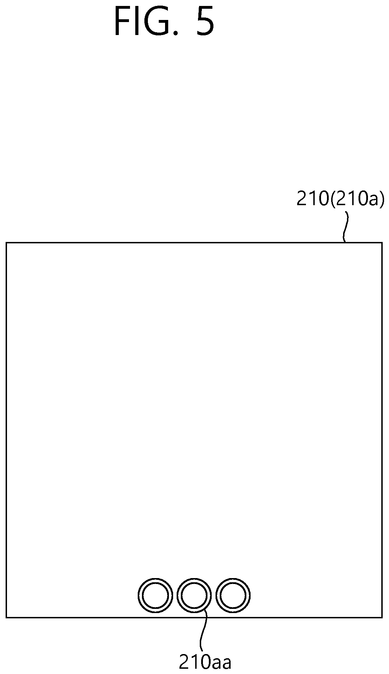

FIG. 3 is a cross-sectional view schematically illustrating a cooling water storage reservoir of a nuclear reactor building passive cooling system according to the present embodiment, and FIG. 4 is a graph illustrating a passive alarm unit of a nuclear reactor building passive cooling system according to the present embodiment. And FIG. 5 is a cross-sectional view illustrating a cooling water storage reservoir of a nuclear reactor building passive cooling system according to the present embodiment taken along line II-II' of FIG. 1.

As shown in FIGS. 3 to 5, the cooling water storage reservoir 200 according to the present embodiment includes a storage tank 200a. The storage tank 200a may form an outer shape of the cooling water storage reservoir 200 and may be supported to an outer wall of the nuclear reactor building 10. Here, the storage tank 200a forms a space for receiving cooling water therein and may be provided in a substantially cubic shape, but a shape of the storage tank 200a is not limited thereto.

At the inside of the storage tank 200a, a partition part 210 for partitioning a receiving space of the cooling water is provided. The partition part 210 may be provided as a partition 210a. The partition 210a disposed between an upper wall and a lower wall of the storage tank 200a forms a first storage tank 200aa adjacent to the nuclear reactor building 10 and a second storage tank 200ab separated from the first storage tank 200aa. Here, the heat exchanger 300 is connected to the first storage tank 200aa. A capacity of the second storage tank 200ab may be set to be larger than that of the first storage tank 200aa. For example, a capacity of the first storage tank 200aa may be 50% or less of that of the entire storage tank 200a.

A steam outlet H1 is formed in an upper wall of the first storage tank 200aa. The steam outlet H1 enables steam generating by heating cooling water of the first storage tank 200aa when cooling the nuclear reactor building 10 to be discharged to the outside. Therefore, the storage tank 200a can be prevented from being broken or damaged due to a change in an internal pressure.

In addition, a water level reduction delay unit 220 may be installed in a steam outlet H1 may be disposed. The water level reduction delay unit 220 separates droplets and moisture from steam discharged from the first storage 200aa to the outside so that the separated moisture returns to the first storage tank 200aa.

The water level reduction delay unit 220 may be provided as a moisture separator, and may delay cooling water level reduction in the storage tank 200a so as to enable passive cooling of the nuclear reactor building 10 for a long time.

In addition, a passive alarm unit 230 may be installed above the water level reduction delay unit 220. In the case of a design basis accident and a major accident, the passive alarm unit 230 may give an alarm to perform cooling of the nuclear reactor building 10. When vapor is introduced into the steam outlet H1, the passive alarm unit 230 may generate an alarm based on vapor flow.

For example, referring to FIG. 4, the passive alarm unit 230 is provided as a passive noise generator that generates noise in response to occurrence of pressure. In this case, the passive alarm unit 230 may include a passive sound generating module 231 extending to the outside of the steam outlet H1. The sound generating module 231 may be provided in a horn shape and may generate an alarm in the surroundings when an accident occurs or a cooling operation is performed in the nuclear reactor building 10.

However, this is merely an example of the present invention, and the passive alarm unit 230 may be provided with various configurations enabling an alarm passively even when power is not supplied from the outside.

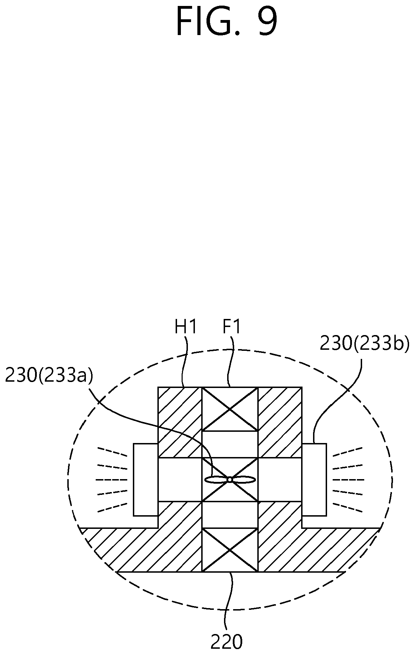

For example, as shown in FIG. 9, the passive alarm unit 230 may include a propeller 233a disposed in the steam outlet H1. The propeller 233a may rotate by vapor being introduced into the steam outlet H1 in cooling of the nuclear reactor building 10, and power generated by the propeller 233a may turn on an LED module 233b disposed in the outside of the steam outlet H1.

As such, when a cooling water leakage occurs, the passive alarm unit 230 may alarm an operation of cooling the nuclear reactor building 10 so as to primarily inform the occurrence of the cooling water leakage primarily to the surroundings, and may notify, later on, whether pressure of the nuclear reactor building 10 is increased or decreased.

A pressure regulator H2 is formed in an upper wall of the second storage tank 200ab. The pressure regulator H2 maintains an internal pressure of the second storage tank 200ab to be equal to an external atmospheric pressure irrespective of an internal pressure of the first storage tank 200aa.

Filters F1 and F2 are mounted in the steam outlet H1 and the pressure regulator H2, respectively. When the heat exchanger 300 is broken or damaged, the filters F1 and F2 prevent harmful substances, for example, radioactive materials that may be entered from the inside of the nuclear reactor building 10 into the storage tank 200a from being discharged to outer air.

In a lower area of the partition 210a, an inlet for enabling the first storage tank 200aa and the second storage tank 200ab to communicate may be provided. Such an inlet may be provided as a connection pipe 210aa. Here, a plurality of connecting pipes 210aa may be provided.

However, when a plurality of connecting pipes 210aa are provided, the plurality of connecting pipes 210aa may be disposed at the same height in order to prevent cooling water from circulating by natural convection between the first storage tank 200aa and the second storage tank 200ab.

Further, FIG. 5 illustrates an embodiment in which three connecting pipes 210aa are provided, but the number of the connecting pipes 210aa is not limited thereto. In the present embodiment, the connection pipe 210aa is disposed in the partition 210aa and thus the first storage tank 200aa and the second storage tank 200ab communicate with each other. However, in the partition 210a, a hole may be formed, except for the connection pipe 210aa, and the hole may be formed in various shapes including a circular shape and a slit.

The connection pipe 210aa forms a path that may enable cooling water received in the second storage tank 200ab to enter into the first storage tank 200aa.

More specifically, in the event of a cooling water spill accident, the first storage tank 200aa connected to the heat exchanger 300 quickly reaches a saturation temperature. This contributes to stabilization of a heat removal performance of the cooling system 100 and thus a temperature and pressure of the nuclear reactor building 10 are quickly stabilized. The reason why a capacity of the first storage tank 200aa is smaller than that of the second storage tank 200ab as described above is intended to achieve such an effect.

Thereafter, the first storage tank 200aa reaches a saturation temperature, and cooling water received in the first storage tank 200aa is heated and discharged to the outside through the steam outlet H1. Therefore, a water level difference occurs between the first storage tank 200aa and the second storage tank 200ab. Therefore, cooling water in the second storage tank 200ab is entered into the first storage tank 200aa through the connection pipe 210aa so as to eliminate the water level difference.

Accordingly, the cooling water storage reservoir 200 constantly maintains a heat removal performance of the cooling system 100 from the beginning of a severe accident to enable a pressure and temperature of the nuclear reactor building 10 to gradually reduce. Therefore, in a conventional cooling system, while a temperature and pressure of the nuclear reactor building 10 decrease, a heat removal performance decreases due to increase of the cooling water temperature and a problem can be solved that the pressure and temperature of the nuclear reactor building 10 is thus repressurized and reheated.

More specifically, the conventional cooling system and the cooling system 100 according to the present embodiment are compared as follows.

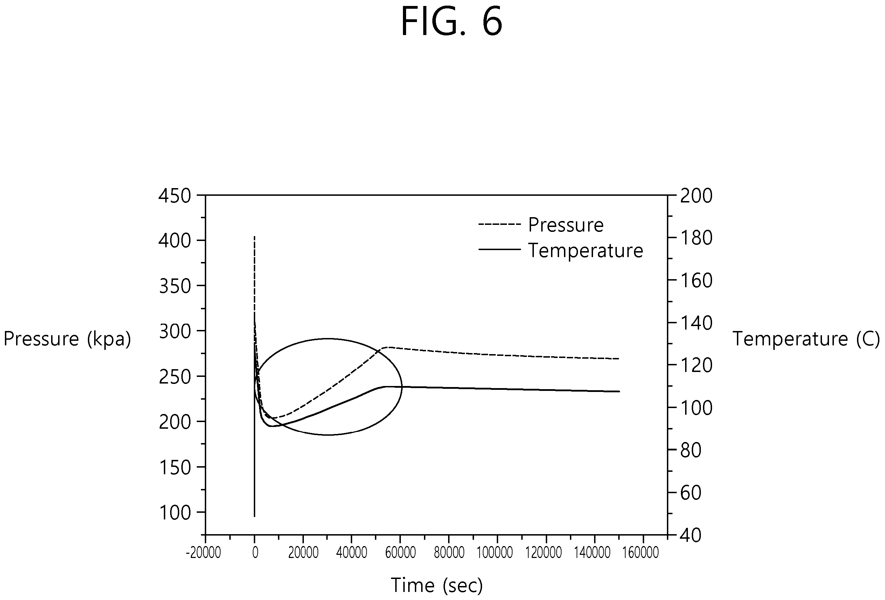

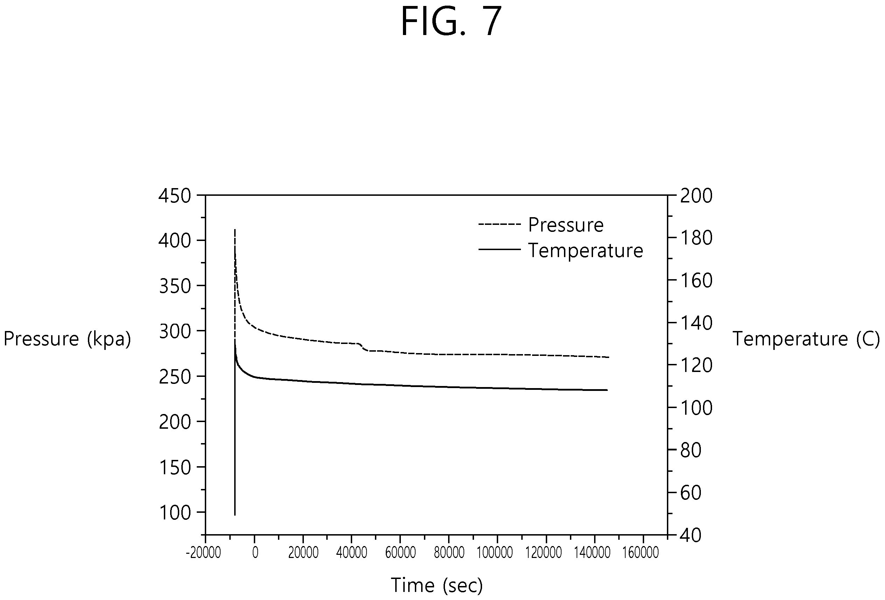

FIG. 6 is a graph illustrating changes in an internal pressure and temperature of a nuclear reactor building according to use of a cooling water storage reservoir of a conventional passive cooling system, and FIG. 7 is a graph illustrating changes in an internal pressure and temperature of a nuclear reactor building according to use of a cooling water storage reservoir of a nuclear reactor building passive cooling system according to the present embodiment.

As shown in FIGS. 6 and 7, a conventional cooling system operates with temperature and pressure rise of the nuclear reactor building 10 in the event of a cooling water spill accident. In this case, the conventional cooling system may reduce a temperature and pressure of the nuclear reactor building 10.

However, in an existing cooling system, efficiency of the cooling system 100 is significantly reduced as cooing water is heated after a predetermined time passes. Thus, as shown in section "A" indicated in FIG. 5, there is a problem that temperature and pressure of the nuclear reactor building 10 are increased again. In particular, in a section where temperature and pressure of the nuclear reactor building 10 are increased again for a long time, there is a possibility that a reactor operator takes a wrong action to secure an additional cooling means in order to prevent the re-pressure of the nuclear reactor building 10. In addition, stress applied to the nuclear reactor building 10 in this course may cause breakage and damage to the nuclear reactor building 10.

However, in the cooling system 100 according to the present embodiment, even if cooling water stored in the first storage tank 200aa is heated, cooling water received in the second storage tank 200ab is naturally entered into the first storage tank 200aa according to steam discharged to outside air. Accordingly, as shown in FIG. 7, a temperature and pressure of the nuclear reactor building 10 are reduced smoothly in the case of a design basis accident and a major accident, and a problem can be solved that the temperature and pressure of the nuclear reactor building 10 rise again. In addition, as the steam discharging unit 340 is provided, it is possible to drive the cooling system 100 stably, for example, minimizing flow instability due to interaction between water and steam.

Hereinafter, an operation of a nuclear reactor building passive cooling system according to the present embodiment will be described in more detail. However, a detailed description of the above-described constituent elements is omitted and constituent elements identical to or corresponding to those according to the foregoing embodiment are denoted by the same reference numerals.

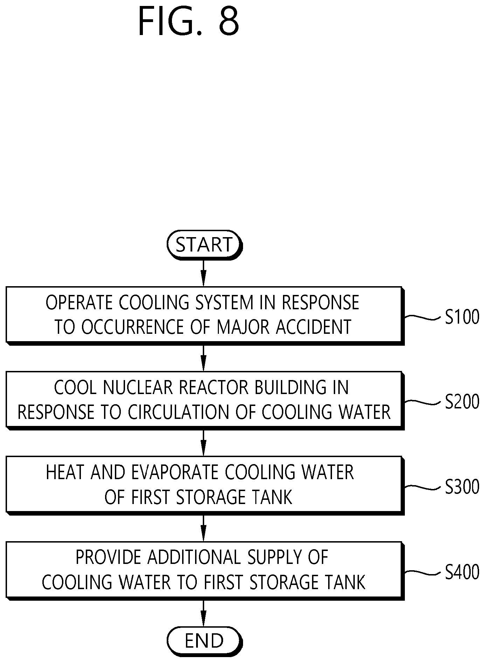

FIG. 8 is a flowchart illustrating an operation of a nuclear reactor building passive cooling system according to the present embodiment.

As shown in FIG. 8, the cooling system 100 according to the present embodiment may be operated in the event of a cooling water spill accident (S100). In this case, steam and radioactive materials are discharged from inside the nuclear reactor building 10, thereby increasing a temperature and pressure of an inner space of the nuclear reactor building 10.

Therefore, cooling water in the heat exchange unit 330 is heated, and the heated cooling water is entered into the first storage tank 200aa. In this case, the cooling water received in the first storage tank 200aa is entered into the heat exchanger 300 to be provided to the heat exchange unit 330. In this manner, the cooling system 100 repeats inflow and outflow and circulates cooling water based on a natural force (S200).

After an accident occurs, as a time has elapsed, a temperature of cooling water in the first storage tank 200aa rises to a boiling point (S300) . However, in a state in which cooling water stored in the second storage tank 200ab is not mixed with the cooling water in the first storage tank 200aa, the cooling water stored in the second storage tank 200ab maintains an initial temperature.

Further, a time at which cooling water in the first storage tank 200aa reaches a boiling point becomes shorter than that of a conventional cooling water storage reservoir having the same capacity as that of the cooling water storage reservoir 200 according to the present embodiment. Therefore, the cooling system 100 according to the present embodiment is stabilized through a relatively short transient period.

Further, as cooling water of the first storage tank 200aa evaporates, cooling water of a low temperature of the second storage tank 200ab is naturally entered into the first storage tank 200aa (S400). Accordingly, a heat removal performance of the cooling system 100 is lowered due to increase in a temperature of cooling water stored in the first storage tank 200aa, thereby solving a problem that a pressure and temperature of the nuclear reactor building 10 are repressurized and reheated.

In addition, as the water level reduction delay unit 220 is provided, the retention time of cooling water in the first storage tank 200 may be increased, thereby cooling the nuclear reactor building for a long time. Therefore, the water level reduction delay unit 220 may enable responding to a design basis accident and a major accident for a long time.

Therefore, a cooling water storage reservoir and a nuclear reactor building passive cooling system including the same can quickly stabilize a performance of the nuclear reactor building passive cooling system, thereby preventing performance deterioration of the nuclear reactor building passive cooling system.

Further, the cooling water storage reservoir and the nuclear reactor building passive cooling system including the same can continuously reduce a pressure and temperature of the nuclear reactor building, and thus a secondary accident such as destruction of the nuclear reactor building can be suppressed from occurring.

The embodiments of the present invention described above and shown in the drawings should not be construed as limiting the technical idea of the present invention. The invention is defined in the appended claims.

## Claims

1. Nuclear reactor having a building (10) and a building passive cooling system (100) disposed adjacent to an outer wall of said nuclear reactor building (10) and capable of passively cooling the nuclear reactor building (10), the system (100) comprising:
a cooling water storage reservoir (200) having
a storage tank (200a) storing cooling water;
a partition part (210) which is disposed inside the storage tank (200a), which partitions an inside of the storage tank (200a) into a first storage tank (200aa) and a second storage tank (200ab) to separate the cooling water, and which has an inlet (210aa) for causing the cooling water of the second storage tank (200ab) to naturally flow into the first storage tank (200aa) according to a water level difference between the first storage tank (200aa) and the second storage tank (200ab);
a heat exchanger (300) extending from the first storage tank (200aa) to the inside of the nuclear reactor building (10) and cooling the nuclear reactor building (10) based on the cooling water of the first storage tank (200aa);
a steam discharging unit (340) connected to the heat exchanger (300) and discharging steam generated in the heat exchanger (300) to the outside of the heat exchanger (300);
wherein the steam discharging unit (340) has one end communicating with the heat exchanger (300) and the other end communicating with the first storage tank (200aa);
**characterized in that**
the other end of the steam discharging unit (340) communicates with the first storage tank (200aa) at a position higher than a position of the cooling water contained in the first storage tank (200aa).

2. Nuclear reactor of claim 1, further comprising:
a steam outlet (H1) provided in the first storage tank (200aa) and forming a path along which steam generated in the first storage tank (200aa) is discharged to outside; and
a water level reduction delay unit (220) provided in the steam outlet (H1) and separating moisture contained in the steam to delay reduction of a water level of the first storage tank (200aa).

3. Nuclear reactor of claim 2, wherein the water level reduction delay unit (220) comprises a moisture separator.

4. Nuclear reactor of claim 2, further comprising a passive alarm unit (230) provided in the steam outlet (H1) and configured to alarm operation of the heat exchanger (300) based on steam being introduced into the steam outlet (H1).

5. Nuclear reactor of claim 4, wherein the passive alarm unit (230) comprises a passive sound generating module (231) configured to generate noise in response to steam being introduced into the steam outlet (H1).

6. Nuclear reactor of claim 4, wherein the passive alarm unit (230) comprises:
a propeller (233a) provided inside the steam outlet (H1) and capable of rotating in response to steam being introduced into the steam outlet (H1); and
a light source (233b) connected to the propeller (233a) at the outside of the steam outlet (H1) and capable of being turned on based on power generated by the propeller (233a).

7. Nuclear reactor of claim 1, wherein a capacity of the first storage tank (200aa) is smaller than a capacity of the second storage tank (200ab).

## Patentansprüche

1. Kernreaktor mit einem Gebäude (10) und einem Gebäude-Passivkühlsystem (100), das angrenzend an eine Außenwand des Kernreaktorgebäudes (10) angeordnet und in der Lage ist, das Kernreaktorgebäude (10) passiv zu kühlen, wobei das System (100) aufweist:
ein Kühlwasserspeicherreservoir (200) mit einem Speichertank (200a), der Kühlwasser speichert;
ein Unterteilungsteil (210), das im Inneren des Speichertanks (200a) angeordnet ist und das ein Inneres des Speichertanks (200a) in einen ersten Speichertank (200aa) und einen zweiten Speichertank (200ab) unterteilt, um das Kühlwasser zu trennen, und das einen Einlass (210aa) aufweist, um zu bewirken, dass das Kühlwasser des zweiten Speichertanks (200ab) auf natürliche Weise in den ersten Speichertank (200aa) gemäß einer Wasserstandsdifferenz zwischen dem ersten Speichertank (200aa) und dem zweiten Speichertank (200ab) fließt;
einen Wärmetauscher (300), der sich von dem ersten Speichertank (200aa) in das Innere des Kernreaktorgebäudes (10) erstreckt und das Kernreaktorgebäude (10) basierend auf dem Kühlwasser des ersten Speichertanks (200aa) kühlt;
eine Dampfabgabeeinheit (340), die mit dem Wärmetauscher (300) verbunden ist und im Wärmetauscher (300) erzeugten Dampf zur Außenseite des Wärmetauschers (300) abgibt;
wobei die Dampfabgabeeinheit (340) mit einem Ende mit dem Wärmetauscher (300) und mit dem anderen Ende mit dem ersten Speichertank (200aa) in Verbindung steht;
**dadurch gekennzeichnet, dass**
das andere Ende der Dampfabgabeeinheit (340) mit dem ersten Speichertank (200aa) an einer Position in Verbindung steht, die höher als eine Position des in dem ersten Speichertank (200aa) enthaltenen Kühlwassers ist.

2. Kernreaktor nach Anspruch 1, des Weiteren aufweisend:
einen Dampfauslass (H1), der in dem ersten Speichertank (200aa) vorgesehen ist und einen Pfad bildet, entlang dem der in dem ersten Speichertank (200aa) erzeugte Dampf nach außen abgeleitet wird; und
eine Verzögerungseinheit (220) zur Reduzierung des Wasserstands, die in dem Dampfauslass (H1) vorgesehen ist und in dem Dampf enthaltene Feuchtigkeit abscheidet, um die Verringerung eines Wasserstands des ersten Speichertanks (200aa) zu verzögern.

3. Kernreaktor nach Anspruch 2, bei dem die Verzögerungseinheit (220) zur Reduzierung des Wasserstands einen Feuchtigkeitsabscheider aufweist.

4. Kernreaktor nach Anspruch 2, des Weiteren aufweisend eine passive Alarmeinheit (230), die in dem Dampfauslass (H1) vorgesehen und so konfiguriert ist, dass sie den Betrieb des Wärmetauschers (300) auf der Grundlage des in den Dampfauslass (H1) eingeleiteten Dampfes alarmiert.

5. Kernreaktor nach Anspruch 4, bei dem die passive Alarmeinheit (230) ein passives Schallerzeugungsmodul (231) aufweist, das so konfiguriert ist, dass es als Reaktion auf die Einleitung von Dampf in den Dampfauslass (H1) ein Geräusch erzeugt.

6. Kernreaktor nach Anspruch 4, bei dem die passive Alarmeinheit (230) aufweist:
einen Propeller (233a), der innerhalb des Dampfauslasses (H1) vorgesehen ist und in der Lage ist, sich in Reaktion auf in den Dampfauslass (H1) eingeleiteten Dampf zu drehen; und
eine Lichtquelle (233b), die mit dem Propeller (233a) an der Außenseite des Dampfauslasses (H1) verbunden und in der Lage ist, auf der Grundlage der durch den Propeller (233a) erzeugten Energie eingeschaltet zu werden.

7. Kernreaktor nach Anspruch 1, bei dem ein Fassungsvermögen des ersten Speichertanks (200aa) kleiner als ein Fassungsvermögen des zweiten Speichertanks (200ab) ist.

## Revendications

1. Réacteur nucléaire ayant un bâtiment (10) et un système de refroidissement passif de bâtiment (100) disposé à côté d'une paroi extérieure dudit bâtiment de réacteur nucléaire (10) et capable de refroidir passivement le bâtiment de réacteur nucléaire (10), le système (100) comprenant :
un réservoir de stockage d'eau de refroidissement (200) ayant un réservoir de stockage (200a) stockant de l'eau de refroidissement ;
une partie de séparation (210) qui est disposée à l'intérieur du réservoir de stockage (200a), qui sépare un intérieur du réservoir de stockage (200a) en un premier réservoir de stockage (200aa) et un second réservoir de stockage (200ab) pour séparer l'eau de refroidissement, et qui a une entrée (210aa) pour amener l'eau de refroidissement du second réservoir de stockage (200ab) à s'écouler naturellement jusque dans le premier réservoir de stockage (200aa) en fonction d'une différence de niveau d'eau entre le premier réservoir de stockage (200aa) et le second réservoir de stockage (200ab) ;
un échangeur de chaleur (300) s'étendant du premier réservoir de stockage (200aa) jusqu'à l'intérieur du bâtiment de réacteur nucléaire (10) et refroidissant le bâtiment de réacteur nucléaire (10) sur la base de l'eau de refroidissement du premier réservoir de stockage (200aa) ;
une unité d'évacuation de vapeur (340) reliée à l'échangeur de chaleur (300) et évacuant de la vapeur générée dans l'échangeur de chaleur (300) vers l'extérieur de l'échangeur de chaleur (300) ;
dans lequel l'unité d'évacuation de vapeur (340) a une première extrémité communiquant avec l'échangeur de chaleur (300) et l'autre extrémité communiquant avec le premier réservoir de stockage (200aa) ;
**caractérisé en ce que**
l'autre extrémité de l'unité d'évacuation de vapeur (340) communique avec le premier réservoir de stockage (200aa) dans une position plus élevée qu'une position de l'eau de refroidissement contenue dans le premier réservoir de stockage (200aa) .

2. Réacteur nucléaire selon la revendication 1, comprenant en outre :
une sortie de vapeur (H1) prévue dans le premier réservoir de stockage (200aa) et formant un trajet le long duquel de la vapeur générée dans le premier réservoir de stockage (200aa) est évacuée vers l'extérieur ; et
une unité de retard de réduction de niveau d'eau (220) prévue dans la sortie de vapeur (H1) et séparant l'humidité contenue dans la vapeur pour retarder la réduction d'un niveau d'eau du premier réservoir de stockage (200aa).

3. Réacteur nucléaire selon la revendication 2, dans lequel l'unité de retard de réduction de niveau d'eau (220) comprend un séparateur d'humidité.

4. Réacteur nucléaire selon la revendication 2, comprenant en outre une unité d'alarme passive (230) prévue dans la sortie de vapeur (H1) et configurée pour actionner une alarme de l'échangeur de chaleur (300) sur la base de la vapeur introduite dans la sortie de vapeur (H1).

5. Réacteur nucléaire selon la revendication 4, dans lequel l'unité d'alarme passive (230) comprend un module générateur de son passif (231) configuré pour générer du bruit en réponse à la vapeur introduite dans la sortie de vapeur (H1).

6. Réacteur nucléaire selon la revendication 4, dans lequel l'unité d'alarme passive (230) comprend :
une hélice (233a) prévue à l'intérieur de la sortie de vapeur (H1) et capable de tourner en réponse à de la vapeur introduite dans la sortie de vapeur (H1) ; et
une source de lumière (233b) reliée à l'hélice (233a) au niveau de l'extérieur de la sortie de vapeur (H1) et capable d'être mise en marche sur la base de la puissance générée par l'hélice (233a).

7. Réacteur nucléaire selon la revendication 1, dans lequel une capacité du premier réservoir de stockage (200aa) est inférieure à une capacité du second réservoir de stockage (200ab).
